# EUROPEAN PATENT APPLICATION

(11) **EP 4 742 066 A1**
(43) Date of publication of application: **13.05.2026**
(21) Application number: 25177840.3
(22) Date of filing: 21.05.2025
(51) Int. Cl.: G06F 21/31, H04W 12/60, H04L 9/40, G06F 21/30, G06F 21/32, H04W 12/71, H04W 12/77

(54) **ACCESS AUTHENTICATION METHOD USING SNS LINKAGE AND A DEVICE USING THE SAME**

(30) Priority: 12.11.2024 KR 20240160240; 12.12.2024 KR 20240184880
(71) Applicant: Suprema Inc., Seongnam-si, Gyeonggi-do 13554 (KR)
(72) Inventor: LEE, Jong Keun, 13599 Gyeonggi-do (KR); JANG, Seung Jin, 16965 Gyeonggi-do (KR); KYUNG, Jae Hyun, 05797 Seoul (KR); KIM, Myung Kook, 16469 Gyeonggi-do (KR)
(74) Representative: Westphal, Mussgnug & Partner Patentanwälte mbB

(57) **Abstract**

An access authentication method using SNS linkage and a device using the same are disclosed. According to one embodiment, a method for access authentication of a terminal comprises acquiring identification information of a control device from the control device, performing login for a user of the terminal to an authentication server, and acquiring user identification information of the terminal from the authentication server according to the login, generating authentication data based on the identification information of the control device and the user identification information, and transmitting the authentication data to a server that performs user authentication for the user of the terminal, wherein the server being different from the authentication server.

## Description

### CROSS-REFERENCE TO RELATED APPLICATION(S)

This application is based on and claims priority under 35 U.S.C. § 119 to Korean Patent Application No. 10-2024-0160240, filed on November 12, 2024, and Korean Patent Application No. 10-2024-0184880, filed on December 12, 2024, in the Korean Intellectual Property Office, the disclosure of which is herein incorporated by reference in its entirety.

### BACKGROUND

### FIELD

The present invention relates to an access authentication method using SNS linkage and a device using the same.

### DESCRIPTION OF RELATED ART

In the field of performing user authentication to manage access to buildings or specific areas, payment processing, and use of specific devices, technology utilizing user terminals to improve convenience is being used. In such technology, while user terminals were traditionally implemented as card keys, they are gradually expanding to terminals such as smartphones that users carry.

However, the time required to acquire information necessary for user authentication on the terminal may take longer compared to traditional card keys, and accordingly, users may experience inconvenience feeling delays, and several security issues may arise.

Recently, efforts to solve these problems continue.

### SUMMARY

An object to be achieved by the disclosure is to provide a control method that reduces the time required for user authentication.

In addition, another object to be achieved by the disclosure is to provide a control method for enhancing security during user authentication.

The objects to be achieved by the disclosure are not limited to those mentioned above, and other objects that are not mentioned above may be clearly understood to those skilled in the art based on the descriptions provided below and the accompanying drawings.

According to an embodiment, a method for access authentication of a terminal, comprises: acquiring identification information of a control device from the control device; performing login for a user of the terminal to an authentication server, and acquiring user identification information of the terminal from the authentication server according to the login; generating authentication data based on the identification information of the control device and the user identification information; and transmitting the authentication data to a server that performs user authentication for the user of the terminal, wherein the server being different from the authentication server.

The acquiring identification information of a control device from the control device comprises: scanning a QR code displayed on the control device; acquiring a QR code payload from the QR code; and acquiring the identification information of the control device from the QR code payload.

The user identification information includes at least one of a mobile phone number of the terminal, a name of the user, an email address of the user, and SNS identification information of the user of the terminal.

The acquiring user identification information of the terminal from the authentication server comprises: acquiring an access token from the authentication server according to the login; and acquiring the user identification information based on the access token.

The acquiring user identification information of the terminal from the authentication server comprises acquiring the user identification information of the terminal from the authentication server through a browser of the terminal, and wherein the transmitting the authentication data comprises transmitting the authentication data to the server through the browser.

The method comprises storing at least one of the access token or the user identification information in the browser or an access authentication application.

The acquiring user identification information of the terminal from the authentication server comprises acquiring the user identification information of the terminal from the authentication server through an access authentication application of the terminal, and wherein the transmitting the authentication data comprises transmitting the authentication data to the server through the access authentication application.

The method comprises: receiving an installation inducement message for the access authentication application from the server; and installing the access authentication application on the terminal according to the installation inducement message.

According to an embodiment, a method for access authentication of a server, comprises: acquiring authentication data from a terminal, wherein the authentication data is based on identification information of a control device controlling a certain security area and user identification information of the terminal, and the user identification information is acquired by the terminal from an authentication server that is different from the server; performing user authentication on whether the user is allowed to access the certain security area; transmitting a result of the user authentication to the control device; acquiring a reverification result of the user authentication result from the control device; and determining whether the user is allowed to access the certain security area based on the reverification result.

The performing user authentication comprises determining validity of access schedule information, and wherein the access schedule information includes an accessible area and accessible time of the user of the terminal.

The user identification information and access schedule information are stored in the server in association with each other.

The access schedule information is acquired from an external device.

According to another embodiment, a method of access authentication of a terminal may include: receiving connection information from the outside; performing communication with a server through a browser according to the connection information; receiving an OTP issuance key from the server; storing the OTP issuance key in the browser; acquiring the OTP issuance key from the browser; generating authentication information using the received OTP issuance key; and performing access authentication based on the authentication information.

The connection information may include information necessary for communication with the server and connection identification information for identifying the connection information.

The connection identification information may be generated as a random value.

The OTP issuance key may be generated once by the server, and the step of receiving an OTP issuance key from the server may include transmitting an OTP issuance key storage confirmation request to the server, and receiving an OTP issuance key storage confirmation response from the server if the OTP issuance key is stored in the server.

The method of access authentication of a terminal according to another embodiment may further include requesting access authentication for a specific area.

The step of generating authentication information using the received OTP issuance key may include generating an OTP using the OTP issuance key, and generating the authentication information using the OTP.

The step of generating authentication information using the received OTP issuance key may include generating a QR code payload based on the OTP, and generating a QR code based on the QR code payload, and the step of performing access authentication based on the authentication information may include displaying the QR code so that the QR code is scanned by the control device.

The step of generating authentication information using the received OTP issuance key may include updating the OTP according to a predetermined cycle to prevent misappropriation of the QR code in an external device.

The step of performing access authentication based on the authentication information may include acquiring the OTP issuance key from the QR code through communication with the control device at the server, generating an OTP based on the OTP issuance key, acquiring a QR code validity verification result by comparing the OTP generated by the server with the OTP included in the QR code, acquiring validity verification result of access schedule information by acquiring access schedule information corresponding to the connection information, and if user authentication is performed based on the QR code validity verification result and the access schedule information validity verification result, acquiring a response regarding access permission according to the result of the user authentication performed by the server from the server through the browser.

According to another embodiment, a method of access authentication of a server may include: acquiring a QR code payload - a QR code including the QR code payload is provided from a terminal - from a control device; acquiring connection identification information from the QR code payload; acquiring an OTP issuance key based on the connection identification information; performing user authentication for a user of the terminal based on the OTP issuance key; and providing a result of the user authentication to the control device.

The method of access authentication of a server according to another embodiment may further include receiving an OTP issuance key issuance request from the terminal by transmitting an OTP issuance key issuance request using connection information including the connection identification information through a browser in the terminal, and generating the OTP issuance key according to the OTP issuance key issuance request.

The step of generating the OTP issuance key according to the OTP issuance key issuance request may include not generating the OTP issuance key if an OTP issuance key issuance request was previously received from the terminal using the connection information, or if an OTP issuance key corresponding to the connection identification information exists in a visitor management database.

The step of acquiring an OTP issuance key based on the connection identification information may include looking up an OTP issuance key corresponding to the connection identification information from a visitor management database, and acquiring the looked up OTP issuance key.

The method of access authentication of a server according to another embodiment may further include acquiring an OTP from the QR code payload, and the step of performing user authentication for a user of the terminal based on the OTP issuance key may include generating an OTP based on the OTP issuance key, comparing the OTP acquired from the QR code payload with the generated OTP, and performing user authentication based on the comparison result.

The method of access authentication of a server according to another embodiment may further include acquiring access schedule information corresponding to the connection information, and the step of performing user authentication for a user of the terminal based on the OTP issuance key may include checking whether the access schedule information is valid, and performing user authentication based on the validity verification result of the access schedule information.

The means for solving the problems of this application are not limited to the solutions described above, and solutions not mentioned will be clearly understood by those skilled in the art to which the invention pertains from this specification and the accompanying drawings.

According to the present application, the time required for user authentication can be reduced. Furthermore, according to the present application, security can be improved during user authentication. The effects of the present application are not limited to the effects described above, and effects not mentioned will be clearly understood by those skilled in the art from the present specification and the accompanying drawings.

According to the present application, the time required for user authentication can be reduced.

Furthermore, according to the present application, security can be improved during user authentication.

The effects of the present application are not limited to the effects described above, and effects not mentioned will be clearly understood by those skilled in the art from the present specification and the accompanying drawings.

### BRIEF DESCRIPTION OF THE DRAWINGS

FIG. 1 is a view illustrating an environment of a management system according to an embodiment.
FIG. 2 is a block diagram of the terminal according to an embodiment.
FIG. 3 is a block diagram of the control device according to an embodiment.
FIG. 4 is a block diagram of the server according to an embodiment.
FIG. 5 is a diagram for explaining an access authentication process according to one embodiment.
FIG. 6 and FIG. 7 are diagrams for explaining an access authentication process according to another embodiment.
FIG. 8 and FIG. 9 are diagrams for explaining an access authentication process according to another embodiment.
FIG. 10 is a diagram for explaining the management of user identification information and visitor access information according to another embodiment.
FIG. 11 is a diagram for explaining an access authentication process according to another embodiment.
FIG. 12 is a diagram for explaining the acquisition of an OTP issuance key by a terminal according to another embodiment.
FIG. 13 is a diagram for explaining the generation of a QR code and an access authentication process using the QR code according to another embodiment.

### DETAILED DESCRIPTION

Embodiments described in the specification are provided to clearly describe the technical concept of the disclosure for those of ordinary skill in the art, and the disclosure is not limited to the embodiments set forth in the specification, and the scope of the disclosure should be interpreted as including various modifications or changes without departing from the technical concept of the disclosure.

The terms used in the specification are general terms that are widely used by considering functions of the disclosure, but the terms may vary depending on intentions of those of ordinary skill in the art, precedents or advent of new technologies. However, if a term is defined as having a certain meaning and is used, the meaning of the term will be specified separately. Accordingly, the terms used in the specification should be interpreted not based on the names of the terms but based on substantial meanings of the terms and contents described throughout the specification.

The drawings attached with the specification are provided to assist in an easy explanation of the disclosure, and shapes illustrated in the drawings may be displayed in an exaggerated way for easy understanding of the disclosure if necessary, and the disclosure is not limited by the drawings.

In the specification, detailed descriptions of well-known configurations or functions will be omitted since they would unnecessarily obscure the subject matters of the disclosure.

Hereinafter, an access management method and an access management device using the same according to an embodiment of the disclosure will be described.

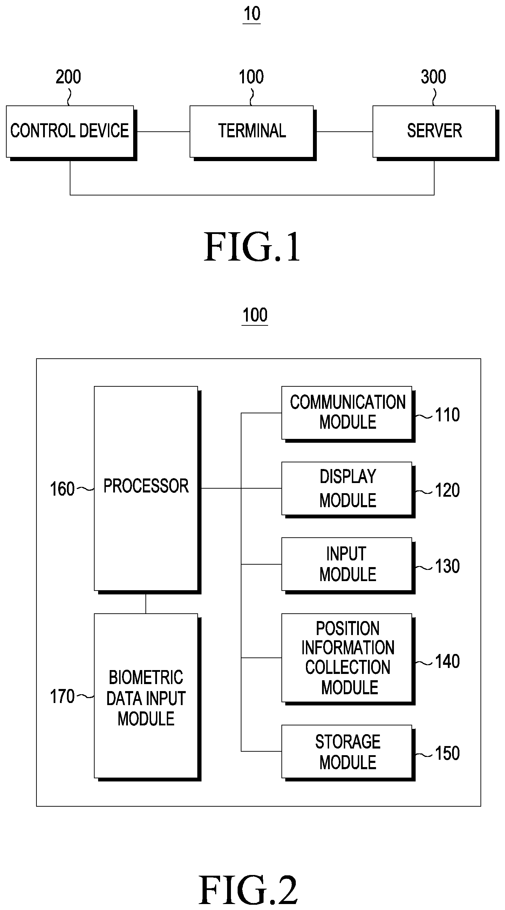

FIG. 1 is a view illustrating an environment of a management system according to an embodiment.

Referring to FIG. 1, the management system 10 may include a terminal 100, a control device 200, and a server 300.

The terminal 100 may communicate with at least one of the control device 200 or the server 300, and may transmit or receive a variety of information. For example, the terminal 100 may transmit or receive information necessary for user authentication to or from the control device 200. Herein, user authentication may refer to authentication that is performed to determine whether a user or a user terminal has a specific authority. For example, user authentication may include authentication of various authorities, such as access authority authentication on whether a user or a user terminal has an authority to access a specific region, payment authority authentication on whether a user or a user terminal has an authority to perform payment processing, using authority authentication on whether a user or a user terminal has an authority to use a specific device, and operation mode setting authentication on whether a user or a user terminal has an authority to set an operation mode of a specific device.

In addition, the terminal 100 may transmit an access request and/or data necessary for the access request to the control device 200 or the server 300. In addition, according to an embodiment, the terminal 100 may perform the above-described user authentication.

In addition, when user authentication is performed, the terminal 100 may request the control device 200 or the server 300 to process user authentication, and may acquire a result of the request for processing for user authentication from the control device 200 or the server 300. In addition, the terminal 100 may acquire information on whether it is possible to perform processing for user authentication from the control device 200 or the server 300, and may perform processing for user authentication based on the information.

In addition, an application for conducting some embodiments, which will be described below, may be provided to the terminal 100.

The terminal 100 may be implemented by a smartphone, a tablet, a personal digital assistant (PDA), a laptop, a wearable device, or the like. Alternatively, the terminal 100 may be implemented by a smart card, an integrated circuit (IC) card, a magnetic card, a radio frequency (RF) chip which is capable of recording data, or the like.

The control device 200 may communicate with at least one of the server 300 or the terminal 100, and may transmit or receive a variety of information. In addition, the control device 200 may perform various processing operations according to a user authentication result described above. For example, the control device 200 may control access by a user to a specific region, may control payment processing of a user, may control use of a specific device by a user, or may control an operation mode of a specific device according to a user authentication result.

Specifically, when access by a user to a specific region is restricted by a gate, the control device 200 may control the gate to control the access by the user to the specific region according to a user authentication result. Herein, the gate may be a device that physically restricts access by a user, and may include an access restriction device (for example, an access bar, an access door, etc.). The control device 200 may provide an unlock signal to the gate according to a user authentication result to control the gate to be opened and allow access by a user. In addition, the control device 200 may not provide the unlock signal to the gate or may provide a lock signal to the gate according to a user authentication result to control the gate to be closed and to prevent access by a user. In addition, according to an embodiment, the control device 200 may be disposed inside or outside the gate.

In addition, when the control device 200 controls payment processing, the control device 200 may perform a payment authorization procedure as a process according to a user authentication result. For example, the control device 200 may receive a payment request from the terminal 100 and may accept or refuse the payment request based on a user authentication result. In addition, according to an embodiment, the payment authorization procedure may be performed in the terminal 100 or the server 300.

In addition, the control device 200 may perform various control operations based on a user authentication result. For example, when the control device 200 controls a gate for accessing a public transportation, the control device 200 may control the gate based on a payment authorization result. In addition, the control device 200 may provide the payment authorization result to at least one of the server 300 or the terminal 100. In addition, when the control device 200 controls use of a specific device according to a user authentication result, the control device 200 may control the use of the specific device through software installed in the specific device, or may control the use of the specific device by controlling a restriction device for physically restricting the use of the specific device, based on a user authentication result.

In addition, when the control device 200 controls an operation mode of a specific device, the control device 200 may configure the operation mode of the specific device based on a user authentication result. For example, when the control device 200 controls an access control device for managing access to a specific region, the control device 200 may control the access control device in a security mode for increasing a security level in the specific region, or may control the access control device in a normal mode in which the security mode is disabled according to a user authentication result. In addition, according to an embodiment, the access control device may be included in the control device 200.

Various processing operations performed according to a user authentication result may also be performed in the server 300 or the terminal 100.

In addition, according to an embodiment, the control device 200 may perform the above-described operation for user authentication. When user authentication is performed, the control device 200 may request the terminal 100 or the server 300 to process user authentication, and may acquire a result of the request for processing from the terminal 100 or the server 300. In addition, the control device 200 may acquire a result on whether it is possible to perform processing for user authentication from the terminal 100 or the server 300, and may perform processing for user authentication based on the result.

The server 300 may communicate with at least one of the control device 200 or the terminal 100, and may transmit or receive a variety of information.

According to an embodiment, the server 300 may provide information necessary for user authentication to at least one of the control device 200 or the terminal 100. In addition, the server 300 may perform the user authentication and may provide a result of the user authentication to at least one of the control device 200 or the terminal 100. In addition, when the user authentication is performed in at least one of the control device 200 or the terminal 100, the server 300 may acquire a result of user authentication from at least one of the control device 200 or the terminal 100.

The server 300 may perform processing according to the user authentication. For example, upon receiving a request for processing for user authentication from the terminal 100 or control device 200, the server 300 may perform processing according to the user request or may determine whether the processing according to the user request will be performed by the terminal 100 or control device 200, and may provide a result of determining to the terminal 100 or the control device 200. Herein, the processing for the user authentication may refer to a follow-up operation that is performed based on user authentication, such as controlling access to a specific region by a user, controlling payment processing of a user, controlling use of a specific device by a user, controlling an operation mode of a specific device according to a user authentication result.

However, the diagram of the environment illustrated in FIG. 1 is merely an example for the convenience of explanation and the disclosure is not limited thereto. According to some embodiments, components may be added to the diagram of the environment of FIG. 1 or may be omitted, and also, may be divided.

FIG. 2 is a block diagram of the terminal according to an embodiment.

Referring to FIG. 2, the terminal 100 may include a communication module 110, a display module 120, an input module 130, a position information collection module 140, a storage module 150, a processor 160, and a biometric data input module 170.

The communication module 110 may communicate with at least one of the server 300 or the control device 200. For example, the communication module 110 may transmit or receive information necessary for user authentication or information on a user authentication result to or from at least one of the server 300 or the control device 200.

In addition, the communication module 110 may include a mobile communication module supporting Bluetooth low energy (BLE), Bluetooth, wireless local area network (WLAN), Wireless Fidelity (WiFi), WiFi Direct, near field communication (NFC), infrared data association (IrDA), ultra wide band (UWB), Zigbee, 3rd generation (3G), 4G, or 5G, and a wired or wireless module to transmit or receive data through various other communication standards.

The display module 120 may output a variety of visual information. For example, when the control device 200 is detected through communication with the control device 200 and a communication connection is established, the display module 120 may output relevant information. In addition, the display module 120 may visually output a user authentication result. In addition, the display module 120 may visually output a message received from the server 300. In addition, the display module 120 may output various authentication information such as QR codes.

The display module 120 may be a liquid crystal display (LCD), an organic light emitting diode (OLED), an active matrix organic LED (AMOLED) display, or the like. When the display module 120 is provided as a touch screen, the display module 120 may perform a function of the input module 130. In this case, a separate input module 130 may not be provided according to selection, and the input module 130 performing a limited function, such as volume control, power button, and a home button, may be provided.

The input module 130 may acquire a signal corresponding to a user input. For example, the input module 130 may acquire an input for requesting user authentication from the server 300 or the control device 200. In addition, the input module 130 may acquire an input for acquiring information necessary for user authentication (for example, user authority information, user private information (or identification information of a user or a terminal, identification information necessary for payment processing (for example, card information of a user, authentication information corresponding to card information), user biometric data, encryption information, etc.)).

In addition, the input module 130 may be implemented by a keyboard, a key pad, a button, a jog shuttle, a wheel or the like. In addition, the user input may be, for example, pressing of a button, touch and drag. When the display module 120 is implemented by a touch screen, the display module 120 may perform the role of the input module 130. In addition, the input module 130 may be implemented as a camera. For example, the input module 130 may scan QR codes displayed by external devices (for example, the control device).

The position information collection module 140 may acquire position information for identifying a position of the terminal 100. For example, the position information collection module 140 may acquire coordinate information for determining a position like a global positioning system (GPS) sensor. In another example, the position information collection module 140 may determine the position of the terminal 100 based on a signal received from an external device. For example, when the terminal 100 receives a signal indicating a specific region from the control device 200, the terminal 100 may identify that the terminal 100 is in the specific region in response to reception of the signal.

In addition, the storage module 150 may store various data. For example, the storage module 150 may store data necessary for operations of the terminal 100 (for example, information necessary for user authentication (for example, user authority information, user private information (or identification information of a user or a terminal, identification information necessary for payment processing (for example, card information of a user, authentication information corresponding to card information), user biometric data, encryption information, etc.))).

The storage module 150 may include a storage medium of at least one type of a flash memory type, a hard disk type, a multimedia card micro type, a memory of a card type (for example, a SD or XD memory), a random access memory (RAM), a static random access memory (SRAM), a read only memory (ROM), an electrically erasable programmable read-only memory (EEPROM), a programmable read-only memory (PROM) magnetic memory, a magnetic disk, an optical disk. The memory may store information temporarily, permanently, or semi-permanently, and may be provided in an embedded type or a removable type.

The processor 160 may control respective components of the terminal 100 or may process or compute a variety of information. In addition, the processor 160 may acquire signals from some components included in the terminal 100. In addition, the processor 160 may control operations for performing some steps performed in the terminal 100 among the steps of methods which will be described below, or may perform computation necessary for performing the steps.

The processor 160 may be implemented by software, hardware, and a combination thereof. For example, in terms of hardware, the processor 160 may be implemented by a field programmable gate array (FPGA), an application specific integrated circuit (ASIC), a semiconductor chip, and electronic chips of various other types. In another example, in terms of software, the processor 160 may be implemented by a logic program or various computer languages which are performed according to the above-described hardware.

The biometric data input module 170 may receive biometric data of a user. The biometric data may refer to at least one of voice, fingerprint, iris, face, and vein information of the user. The biometric data input module 170 may be implemented by at least one of a microphone to which voice information of a user is inputted, a screen scanner to which fingerprint information of a user is inputted, a camera to which iris, face, vein information of a user is inputted.

The terminal 100 may not necessarily include all of the above-described components, and some components may be omitted according to selection. For example, when the terminal 100 does not receive biometric data, the terminal 100 may be provided without the biometric data input module 170. In addition, the terminal 100 may be provided with a component added to perform an additional function and operation according to selection.

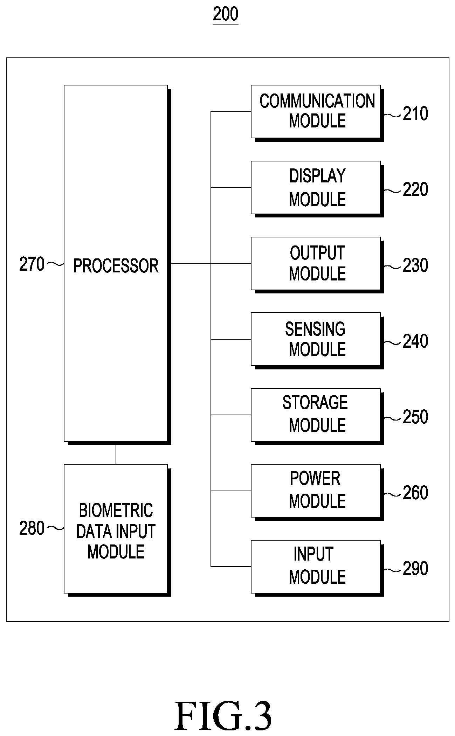

FIG. 3 is a block diagram of the control device according to an embodiment.

Referring to FIG. 3, the control device 200 may include a communication module 210, a display module 220, an output module 230, a sensing module 240, a storage module 250, a power module 260, a processor 270, a biometric data input module 280, and an input module 290.

The communication module 210 may communicate with at least one of the server 300 or the terminal 100. For example, the communication module 210 may transmit or receive information necessary for user authentication or user authentication result information to or from at least one of the server 300 or the terminal 100.

The communication module 210 may generally perform communication according to wireless communication standards, and may include a mobile communication module supporting BLE, Bluetooth, WLAN, WiFi, WiFi Direct, NFC, IrDA, UWB, Zigbee, 3G, 4G, or 5G, and a wired or wireless module to transmit data through various other communication standards. In addition, the communication module 210 may include a short-range wireless module that supports NFC, radio frequency identification (RFID).

The display module 220 may output information to be visually provided to a user. For example, when a door open signal is received, the display module 220 may output visual information indicating the reception of the door open signal. In addition, the display module 220 may output various authentication information such as QR codes.

The display module 220 may be an LCD, an OLED, an AMOLED display. When the display module 220 includes a touch panel, the display module 220 may operate as an input device which is based on a touch input.

The output module 230 may output information to be acoustically provided to a user. For example, when the door open signal is received, the output module 230 may output auditory information indicating the reception of the door open signal. In addition, when a setting change signal is received, the output module 230 may output auditory information indicating the reception of the setting change signal.

The output module 230 may be a speaker or a buzzer to output a sound.

The sensing module 240 may acquire a signal regarding an external environment that is necessary for the control device 200. For example, the sensing module 240 may identify whether there exists a movable object (for example, a user) in the proximity of the control device 200. In addition, the sensing module 240 may be disposed in the control device 200 or may be disposed in the proximity of the control device 200. According to an embodiment, the sensing module 240 may not be included in the control device 200. In this case, a separate sensor may be disposed in the proximity of the control device 200.

A variety of information may be stored in the storage module 250. For example, the storage module 250 may store a program for performing a control operation of the processor 270, and may store data received from the outside and data generated in the processor 270. In addition, the storage module 250 may store information necessary for operations of the control device 200 (for example, information necessary for user authentication (for example, user authority information, identification information of a user (for example, identifier information of a user or a user terminal, biometric data of a user, encryption information))), and user authentication result information.

The storage module 250 may include a storage medium of at least one type of a flash memory type, a hard disk type, a multimedia card micro type, a memory of a card type (for example, a SD or XD memory), a RAM, a SRAM, a ROM, an EEPROM, a PROM magnetic memory, a magnetic disk, an optical disk. The memory may store information temporarily, permanently, or semi-permanently, and may be provided in an embedded type or a removable type.

The power module 260 may provide a power necessary for locking or unlocking a gate. In addition, the power module 260 may provide a power necessary for opening or closing a gate. The power module 260 may be provided as a motor, a solenoid, or an actuator.

When the power module 260 provides a power necessary for locking or unlocking a gate, the power module 260 may provide a power to change and/or maintain a lock unit (not shown) for locking or unlocking the gate to go into a lock or unlock state. The lock unit may be provided as a deadbolt, a latch bolt, or a combination thereof. In addition, the lock unit is not limited to the deadbolt and the latch bolt, and typical lock units may be used.

According to an embodiment, the power module 260 may be included in the control device 200 or may not be included in the control device 200. In addition, the power module 260 may be disposed in the proximity of the control device 200 in the form of a separate device. In this case, the control device 200 may provide a signal for controlling the power module 260 to the power module 260. In addition, the lock unit described above may be included in the control device 200, or may be disposed in the proximity of the control device 200 to receive control of the control device 200.

The processor 270 may control respective components of the control device 200 or may process and compute a variety of information. The processor 270 may acquire signals from some components included in the control device 200. In addition, the processor 270 may control operations for performing some steps performed in the control device 200 among the steps of the methods which will be described below, or may perform computation necessary for performing the steps.

The processor 270 may be implemented by software, hardware, and a combination thereof. For example, in terms of hardware, the processor 270 may be implemented by a FPGA, an ASIC, a semiconductor chip, or electronic circuits of various types. For example, in terms of software, the processor 270 may be implemented by a logic program or various computer languages which are performed according to the above-described hardware.

The biometric data input module 280 may receive an input of biometric data of a user. For example, the biometric data input module 280 may receive at least one of voice, fingerprint, iris, face and vein information of a user. The biometric data input module 280 may be implemented by at least one of a microphone to which voice information of a user is inputted, a screen scanner to which fingerprint information of a user is inputted, or a camera to which iris, face, vein information of a user is inputted.

The input module 290 may be configured to receive various inputs. For example, the input module 290 may acquire an input for requesting user authentication from the server 300 or the terminal 100. In addition, the input module 290 may acquire an input for acquiring information necessary for user authentication (for example, identification information of a user or user terminal, encryption information, biometric data). In addition, the input module 290 may receive an input of setting change information for changing setting of the control device 200.

In addition, the input module 290 may receive an input of a user authentication request from a user. For example, when user authentication is authentication of user's access to a specific region, the control device 200 may receive an input for opening a door, and may open the door by actuating the power module 260, or may transmit an access authentication request signal to the server 300 or the terminal 100. For example, the input module 290 may be implemented by a keyboard, a key pad, a button, a switch, a jog shuttle, a wheel or the like. In addition, the user's input may be, for example, pressing of a switch, pressing of a button, touch and drag. When the display module 220 is implemented by a touch screen, the display module 220 may perform the role of the input module 290.

In addition, the input module 290 may be implemented as a camera. For example, the input module 290 may scan QR codes displayed by external devices (for example, the terminal).

The control device 200 according to an embodiment of the disclosure does not necessarily include all of the above-described components, and some components may be omitted according to selection.

For example, the control device 200 may include a control device 200 including a communication module 210 and a processor 270. More specifically, the control device 200 may perform a function of receiving information that is acquired from the terminal 100 through the communication module 210 performing a function of a reader, analyzing the acquired information through the processor 270 performing a function of a controller, and controlling operations such as access management, attendance and absence management, system mode change.

In addition, the control device 200 may be provided with a component added to perform an additional function and operation according to selection.

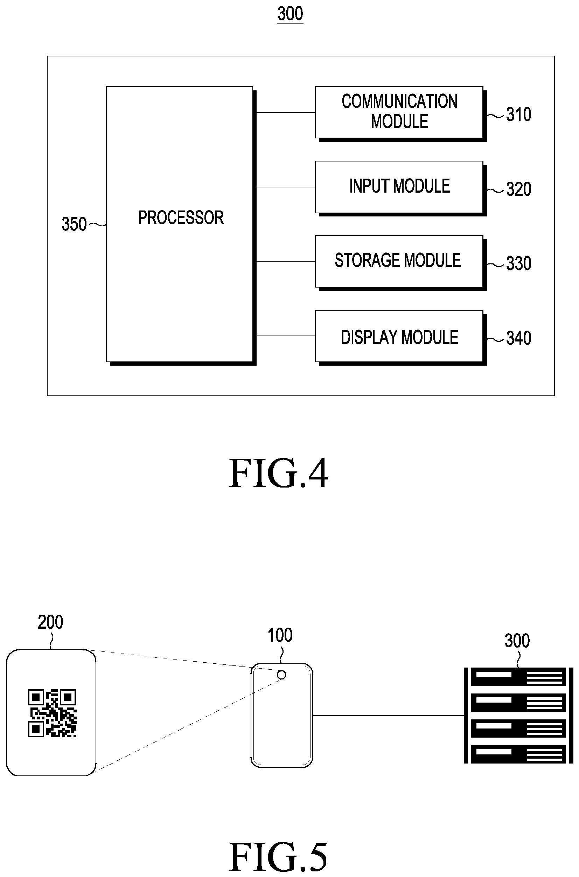

FIG. 4 is a block diagram of the server according to an embodiment.

Referring to FIG. 4, the server 300 may include a communication module 310, an input module 320, a storage module 330, a display module 340, and a processor 350.

The communication module 310 may communicate with at least one of the terminal 100 or the control device 200. In another example, the communication module 310 may transmit biometric data to be stored in the control device 200 to the terminal 100.

In addition, the communication module 310 may include a mobile communication module supporting BLE, Bluetooth, WLAN, WiFi, WiFi Direct, NFC, IrDA, UWB, Zigbee, 3G, 4G, or 5G, and a wired or wireless module to transmit data through various other communication standards.

The input module 320 may acquire an electric signal corresponding to a user input. The input module 320 may include a keypad, a keyboard, a switch, a button, and a touch screen.

The storage module 330 may store various data. For example, the storage module 330 may store information necessary for user authentication (for example, user authority information, user private information (or identification information of a user or a terminal, identification information necessary for payment processing (for example, card information of a user, authentication information corresponding to card information), biometric data of a user, encryption information)), or information on a user authentication result.

In addition, the storage module 330 may store information acquired from the terminal 100 or the control device 200. In addition, the storage module 330 may store a program necessary for operations of the server 300.

In addition, the storage module 330 may include a storage medium of at least one type of a flash memory type, a hard disk type, a multimedia card micro type, a memory of a card type (for example, a SD or XD memory), a RAM, a SRAM, a ROM, an EEPROM, a PROM magnetic memory, a magnetic disk, an optical disk. In addition, the memory may store information temporarily, permanently, or semi-permanently, and may be provided in an embedded type or a removable type.

The display module 340 may output visual information. For example, the display module 340 may be an LCD, an OLED, an AMOLED display.

In addition, the processor 350 may control respective components of the server 300 or may process and compute a variety of information. In addition, the processor 350 may control operations for performing some steps performed in the server 300 among the steps of the methods which will be described below, or may perform computation necessary for performing the steps.

The processor 350 may be implemented by software, hardware, and a combination thereof. For example, in terms of hardware, the processor 350 may be implemented by a FPGA, an ASIC, a semiconductor chip, or electronic circuits of various types. For example, in terms of software, the processor 350 may be implemented by a logic program or various computer languages which are performed according to the above-described hardware.

The server 300 does not necessarily include all of the above-described components, and some components may be omitted according to selection. For example, when the server 300 does not directly provide visual information, the server 300 may be provided without the display module 340. In addition, the server 300 may be provided with a component added to perform an additional function and operation according to selection.

FIG. 5 is a diagram for explaining an access authentication process according to one embodiment.

Referring to FIG. 5, the control device 200 may provide authentication information to the terminal 100 for access authentication. Here, the authentication information is information necessary for user authentication, and for example, the authentication information may be configured in various formats such as QR code, barcode, ultrasonic signal, RF signal, BLE signal, NFC signal, etc. Hereinafter, for the convenience of explanation, the description will focus on an embodiment in which the authentication information is configured as a QR code, but it is not limited thereto, and the authentication information may be configured in various formats such as barcode, ultrasonic signal, RF signal, BLE signal, NFC signal, etc.

The control device 200 may display a QR code. At this time, the QR code payload may include identification information of the control device 200. The terminal 100 may scan the QR code, acquire the QR code payload from the QR code, and acquire the identification information of the control device 200 from the QR code payload.

And, the terminal 100 may acquire user identification information. For example, the user identification information may include the mobile phone number of the terminal 100, SNS identification information of the user of the terminal 100 (for example, SNS account), user's name, user's email address, etc. And, the terminal 100 may generate authentication data using the identification information of the control device 200 and the user identification information, and transmit the authentication data to the server 300.

The server 300 may perform user authentication based on the authentication data and transmit the user authentication result to the control device 200. And, the control device 200 may reverify the user authentication result performed by the server 300. The control device 200 may transmit the reverification result to the server 300, and the server 300 may determine whether to open the gate based on the reverification result.

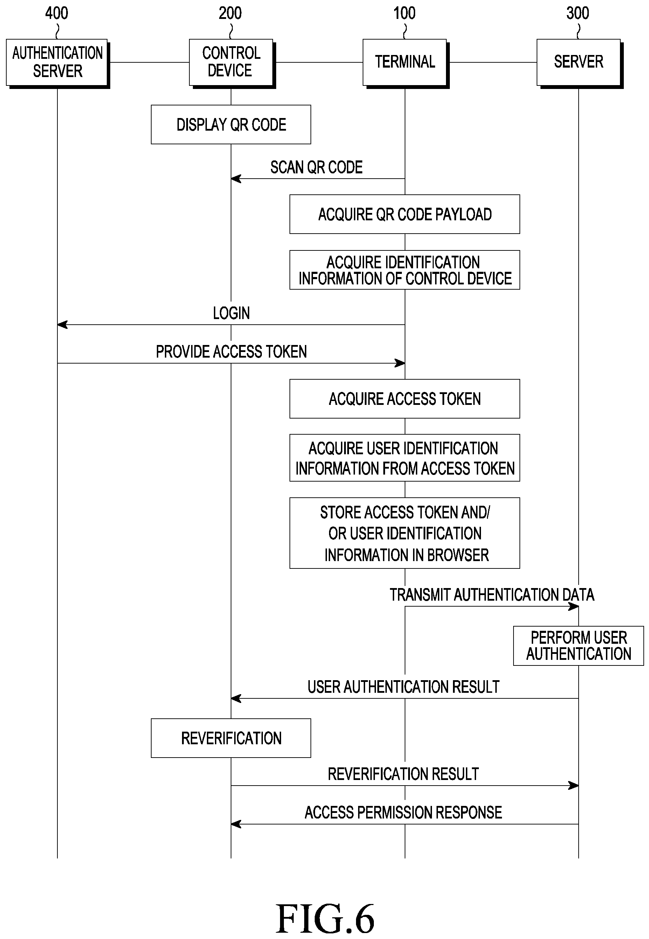

And, the server 300 may transmit a response regarding access permission to the control device 200 based on whether to open the gate. For example, the response regarding access permission may include an access grant message or an access denial message. The control device 200 may open or not open the gate based on the response regarding access permission. At this time, the terminal 100 may perform access authentication through a browser without using a separate application, and in this case, the user identification information may not be stored in the browser. Accordingly, the terminal 100 may need to acquire the user identification information through a predetermined procedure. Various embodiments including the predetermined procedure will be described in detail using FIGS. 6 to 10.

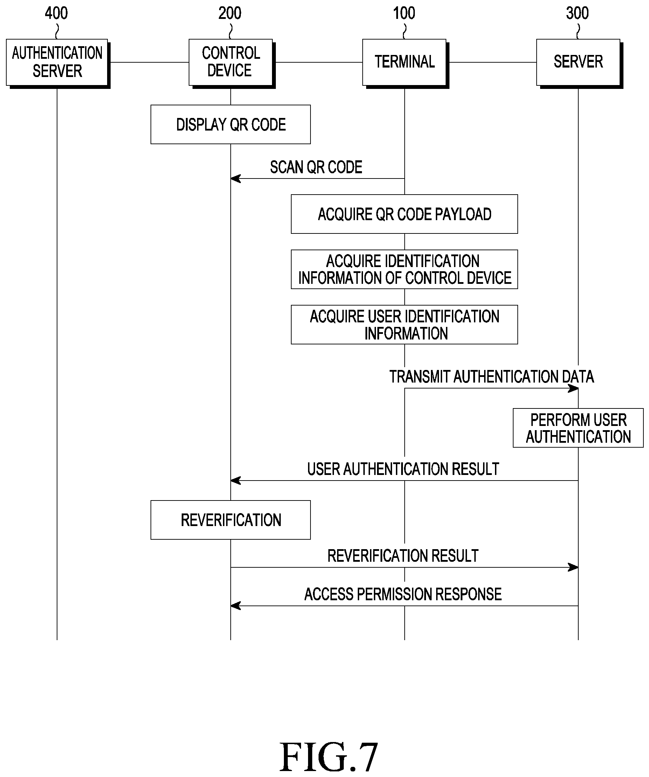

FIG. 6 and FIG. 7 are diagrams for explaining an access authentication process according to another embodiment.

Referring to FIG. 6, the control device 200 may display a QR code. At this time, the QR code payload may include identification information of the control device 200. The terminal 100 may scan the QR code according to a predetermined procedure. The terminal 100 may acquire the QR code payload from the QR code. And, the terminal 100 may acquire the identification information of the control device 200 from the QR code payload.

In addition, the terminal 100 may perform login for the SNS identification information of the user of the terminal 100 to the authentication server 400. Here, the authentication server 400 is different from the server 300 described above, and may be a server that performs authentication of the user of the terminal 100 in various services such as SNS. And, the terminal 100 may communicate with the authentication server 400 using a browser, and may perform login for the SNS identification information of the user of the terminal 100 using the browser.

When login for the SNS identification information of the user of the terminal 100 is performed, the authentication server 400 may provide user identification information to the terminal 100. For example, the user identification information may include the mobile phone number of the terminal 100, SNS identification information, user identification information (for example, the user's name), etc. As an example, the terminal 100 may acquire an access token from the authentication server 400 using the OAuth(Open Authorization) method through the browser. The terminal 100 may acquire user identification information from the access token. The terminal 100 may store the access token and/or user identification information in the browser. At this time, the terminal 100 may encrypt the access token and/or user identification information, and may store the encrypted access token and/or user identification information in the browser.

The terminal 100 may generate authentication data using the identification information of the control device 200 and the user identification information. The terminal 100 may transmit the authentication data to the server 300 using the browser. The server 300 may perform user authentication using the authentication data. As an example, the authentication data and/or user identification information may be encrypted, and the terminal 100 may encrypt the authentication data and/or user identification information. In addition, the terminal 100 may encrypt the user identification information and generate and transmit authentication data using the encrypted user identification information.

The server 300, as user authentication, may determine whether the user of the terminal 100 has the authority to access the control device 200 using the identification information of the control device 200 and the user identification information included in the authentication data. For example, user identification information and access schedule information (accessible area (or identification information of the control device controlling the accessible area), accessible time (start time, end time), etc.) may be matched and stored in the server 300. The server 300 may acquire access schedule information corresponding to the user identification information and verify the validity of the access schedule information. For example, the server 300 may verify the validity of the access schedule information by determining whether the accessible area of the access schedule information corresponds to the control device 200 that displayed the QR code, and whether the accessible time of the access schedule information corresponds to the current time.

The server 300 may transmit the user authentication result to the control device 200. And, the control device 200 may reverify the user authentication result performed by the server 300. For example, the control device 200 may determine whether the accessible area authenticated by the server 300 (or the identification information of the control device controlling the accessible area) is the accessible area controlled by the corresponding control device 200 (or whether the control device authenticated by the server 300 is the corresponding control device 200). If, as a result of reverification, it is determined that there is an abnormality, the control device 200 may transmit information that there is an abnormality in the reverification result to the server 300. In this case, the server 300 may decide not to open the gate to the control device 200. On the other hand, if, as a result of reverification, it is determined that there is no abnormality, the control device 200 may transmit information that there is no abnormality in the reverification result to the server 300. In this case, the server 300 may decide to open the gate to the control device 200 and may command the control device 200 to open the gate.

Also, FIG. 7 is a diagram for explaining an access authentication process after the access authentication process of FIG. 6 is performed.

Referring to FIG. 7, the control device 200 may display a QR code. The terminal 100 may scan the QR code and acquire the QR code payload from the QR code. And, the terminal 100 may acquire the identification information of the control device 200 from the QR code payload. In addition, the terminal 100 may acquire user identification information. For example, the terminal 100 may acquire user identification information from the browser or may acquire user identification information from the access token stored in the browser. Since the access token and/or user identification information are already stored in the browser, the terminal 100 does not need to acquire user identification information through the authentication server 400.

And, the terminal 100 may generate authentication data using the identification information of the control device 200 and the user identification information, the server 300 may perform user authentication, the server 300 may transmit the user authentication result to the control device 200, the control device 200 may perform reverification, the control device 200 may transmit the reverification result to the server 300, and the server 300 may determine whether to open the gate based on the reverification result. Since the content described in FIG. 6 can be applied to this, a detailed description is omitted.

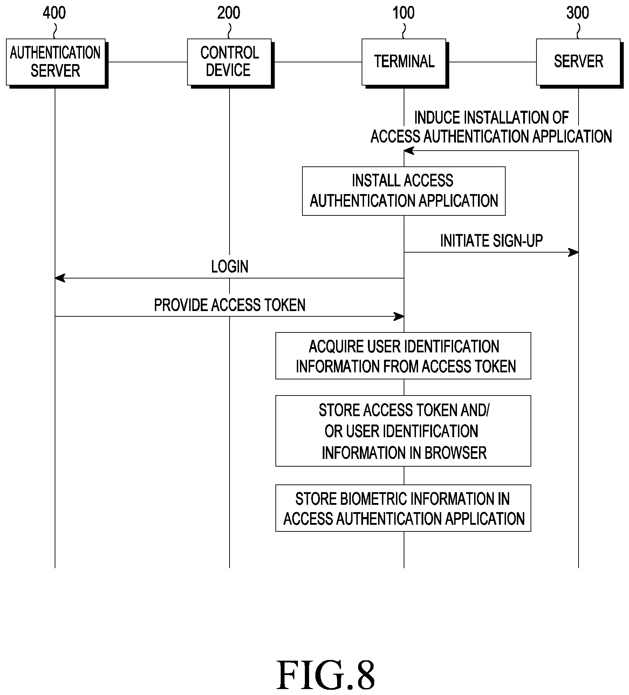

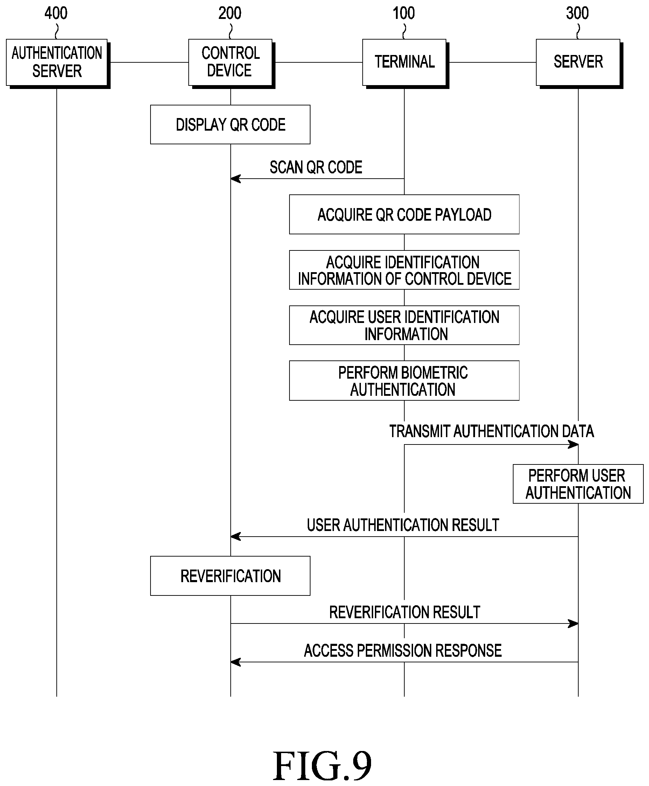

FIG. 8 and FIG. 9 are diagrams for explaining an access authentication process according to another embodiment.

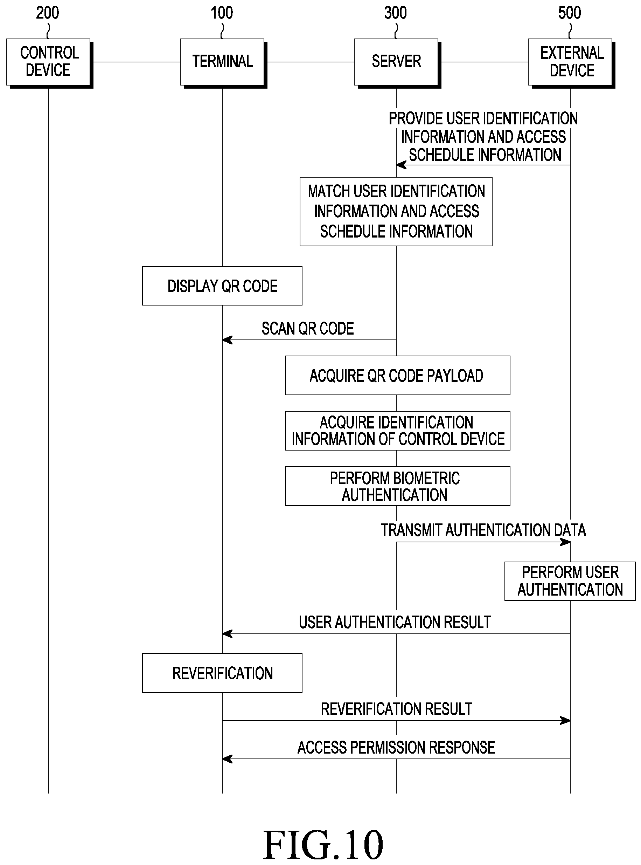

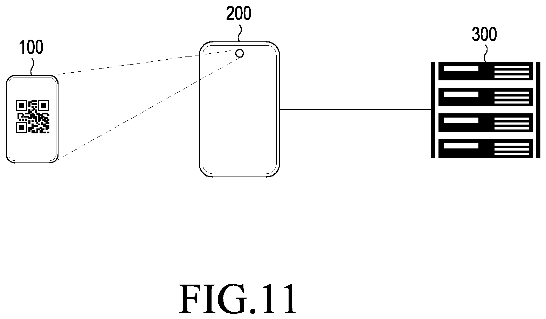

Referring to FIG. 8, the server 300 may induce the installation of an access authentication application on the terminal 100. At this time, the server 300 may receive an installation inducement message for the access authentication application as an inducement for installing the access authentication application, while or after the server 300 transmits a response regarding access permission to the terminal 100 according to the procedures described in FIG. 10 and/or FIG. 11.

In addition, the terminal 100 may install the access authentication application according to the reception of the installation inducement message for the access authentication application. At this time, the access authentication application may not be able to acquire user identification information from the browser described in FIG. 6 and FIG. 7. Accordingly, the terminal 100 may acquire user identification information from the authentication server 400 and store the acquired user identification information in the access authentication application.

Specifically, the terminal 100 may start signing up to the server 300 through the access authentication application. At this time, the server 300 may induce signup through the OAuth method, and the terminal 100 may perform login to the authentication server 400 while performing signup according to the OAuth method. At this time, the terminal 100 may communicate with the authentication server 400 through the access authentication application. And, in response to the login to the authentication server 400, the authentication server 400 may provide an access token to the terminal 100.

And, the terminal 100 may acquire an access token from the authentication server 400 through the access authentication application and may acquire user identification information from the access token. And, the terminal 100 may store the access token and/or user identification information in the access authentication application. At this time, the terminal 100 may encrypt the access token and/or user identification information, and may store the encrypted access token and/or encrypted user identification information in the access authentication application.

In addition, optionally, the terminal 100 may acquire the user's biometric information and register the user's biometric information. This may be for the terminal 100 to perform biometric authentication for the user using the user's biometric information using the access authentication application.

Also, FIG. 9 is a diagram for explaining an access authentication process after the access authentication process of FIG. 8 is performed.

Referring to FIG. 9, the control device 200 may display a QR code. The terminal 100 may scan the QR code and acquire the QR code payload from the QR code. And, the terminal 100 may acquire the identification information of the control device 200 from the QR code payload. In addition, the terminal 100 may acquire user identification information. For example, the terminal 100 may acquire user identification information from the access token stored in the access authentication application, or may acquire user identification information stored in the access authentication application. Since the access token and/or user identification information are already stored in the access authentication application, the terminal 100 does not need to acquire the access token and/or user identification information through the authentication server 400.

And, optionally, the terminal 100 may receive the user's biometric information and perform biometric authentication by comparing the received biometric information with the previously stored biometric information. If the previously stored biometric information and the received biometric information do not match, the access authentication process may be terminated. And, if the previously stored biometric information and the received biometric information match, the terminal 100 may generate authentication data using the identification information of the control device 200 and the user identification information, and may transmit the authentication data of the control device 200 to the server 300 through the access authentication application.

The server 300 may perform user authentication based on the authentication data and may transmit the user authentication result to the control device 200. And, the control device 200 may reverify the user authentication result performed by the server 300. The control device 200 may transmit the reverification result to the server 300, and the server 300 may determine whether to open the gate based on the reverification result. Since the content described in FIG. 6 can be applied to this, a detailed description is omitted.

FIG. 10 is a diagram for explaining the management of user identification information and visitor access information according to another embodiment.

Referring to FIG. 10, the server 300 may acquire access setting information from an external device 500. Here, the external device 500 may be an administrator's terminal or an external server (for example, a client company's server) that can set or modify access permissions. And, the access setting information is information for setting access permission or access level for a specific visitor, and the access setting information may include user identification information of the terminal of the user to whom access will be granted, access schedule information for the user (accessible area (or identification information of the control device controlling the accessible area), accessible time (start time, end time), etc.).

The server 300 may store the access setting information. Specifically, the server 300 may store and match the user identification information of the terminal of the user to whom access will be granted and the access schedule information for the user.

According to the procedures described in FIGS. 5 to 9, when the server 300 acquires the user identification information stored in the browser or access authentication application (or user identification information acquired from the access token stored in the browser or access authentication application) from the terminal 100 and the identification information of the control device 200, it can verify the previously stored user identification information that matches the acquired user identification information, and acquire the access schedule information that matches the verified user identification information. And, as user authentication, the server 300 may determine the validity of the access schedule information using the user identification information and/or the identification information of the control device 200.

The server 300 may transmit the user authentication result to the control device 200. And, the control device 200 may reverify the user authentication result performed by the server 300. The control device 200 may transmit the reverification result to the server 300, and the server 300 may determine whether to open the gate based on the reverification result. Since the content described in FIG. 6 can be applied to this, a detailed description is omitted.

According to these embodiments, cost and procedure simplification may be possible through the access authentication process described in the present application. And, security can be enhanced, and since visitors do not need to additionally manage separate authentication means, the access authentication process described in the present application can be effectively linked with services targeting an unspecified number of people, such as non-face-to-face facility reservation management services.

FIG. 11 is a diagram for explaining an access authentication process according to another embodiment.

Referring to FIG. 11, the terminal 100 may provide authentication information to the control device 200 for access authentication. Here, the authentication information is information necessary for user authentication, and for example, the authentication information may be configured in various formats such as QR code, barcode, ultrasonic signal, RF signal, BLE signal, NFC signal, etc. Hereinafter, for the convenience of explanation, the description will focus on an embodiment in which the authentication information is configured as a QR code, but it is not limited thereto, and the authentication information may be configured in various formats such as barcode, ultrasonic signal, RF signal, BLE signal, NFC signal, etc. At this time, the terminal 100 may perform access authentication using a browser that can connect to the Internet without using a dedicated application. Accordingly, the terminal 100 may provide authentication information to the control device 200 using a browser. In addition, by performing access authentication using a browser without using a dedicated application, the access authentication processor according to an embodiment can have high versatility by being applicable to various applications while enhancing security.

To explain in more detail, first, the terminal 100 may receive connection information from the outside. For example, the terminal 100 may receive messages such as email, SNS message, text message, etc. from the outside, and may acquire a link as connection information from the received message.

Here, the connection information may be transmitted only to the terminal of a user who has authority to access a specific area. For example, the server 300 may acquire identification information (for example, email address, SNS ID, mobile phone number, etc.) of a user who has authority to access a specific area from the outside, and may transmit connection information to a user who has authority to access a specific area based on the acquired identification information.

As an example, the connection information may include information necessary for communication with the server 300 and connection identification information. The connection identification information is for identifying the connection information, and may be a UUID (Universally Unique Identifier). The connection identification information may be in the form of a unique random value. For example, if the connection information is a link, the connection identification information may be displayed in the link as "qid=ba4a3906-4a9f-4332-9c52-580f546aa151". The server 300 may match the connection identification information with the identification information of the user who has authority to access.
Link: http://visitor-frontend-host/qr?qid=ba4a3906-4a9f-4332-9c52-580f546aa151

The terminal 100 may communicate with the server 300 through the browser using the connection information, and may generate or receive a QR code through communication with the server 300. The terminal 100 may display the QR code, and the control device 200 may scan the QR code displayed on the terminal 100 through a camera. The control device 200 may acquire the QR code payload through scanning the QR code, and may transmit the QR code payload to the server 300. The server 300 may perform user authentication using the QR code payload and transmit the user authentication result to the control device 200. The control device 200 may determine whether to open the gate based on the user authentication result from the server 300.

In a specific embodiment, for user A to grant user B access to area A, user A's terminal may transmit a request to grant user B access to area A to the server 300. At this time, the access grant request may include additional information such as user B's access schedule information (accessible area (or identification information of the control device controlling the accessible area), accessible time (start time, end time), etc.), user B's message account (for example, user B's email account, SNS account, mobile phone number, etc.). The server 300 may generate connection identification information according to the access grant request and/or the additional information. And, the server 300 may match the connection identification information with the access schedule information. And, the server 300 may generate connection information (for example, a link) including the connection identification information, and may transmit a message (for example, user B's email) including the connection information to user B's message account (for example, user B's email account).

User B's terminal may acquire connection information through user B's message account, perform communication with the server 300 through the connection information, and generate or receive a QR code through communication with the server 300. User B's terminal 100 may display the QR code, and the control device 200 may determine whether to open the gate controlling area A by scanning the QR code displayed on the terminal 100 through a camera.

The access authentication process according to an embodiment will be described in detail using FIGS. 6 and 7.

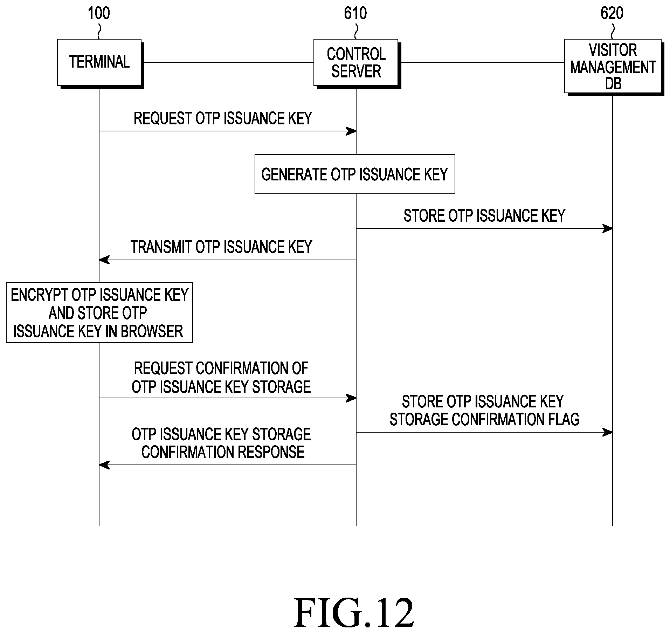

FIG. 12 is a diagram for explaining the acquisition of an OTP issuance key by a terminal according to another embodiment.

Referring to FIG. 12, the terminal 100 may receive connection information from the outside and perform communication with the control server 610 through the connection information. Here, the terminal 100 may be the web front end (Front End, FE) of the terminal 100. In addition, the control server 610 and the visitor management database 620 may be included in the server 300 described above. Also, according to an embodiment, the visitor management database 620 may be included in the control server 610. Also, in another embodiment, the visitor management database 620 may be included in the visitor management server 630 which will be described later.

In addition, the control server 610 may be represented as a visitor management back end (Back End, BE) server. the terminal 100 may transmit the connection identification information included in the connection information while communicating with the control server 610 through a connection request, and the control server 610 may verify which connection information the terminal 100's communication connection is based on through the connection identification information.

Specifically, the terminal 100 may request an OTP issuance key from the control server 610. For example, the terminal 100 may request an OTP issuance key from the control server 610 using the REST API method.

The control server 610 may generate an OTP issuance key in response to the OTP issuance key request from the terminal 100. At this time, if the terminal 100 requests an OTP issuance key from the control server 610 through the corresponding connection information, the control server 610 may generate the OTP issuance key only once. This is to enhance security. For example, if the terminal 100 requests an OTP issuance key from the control server 610 through a first link as connection information, the control server 610 may issue a first OTP issuance key. Later, if the terminal 100 requests an OTP issuance key from the control server 610 again through the first link, the control server 610 may not issue the first OTP issuance key. And, if the terminal 100 requests an OTP issuance key from the control server 610 through a second link that is different from the first link, the control server 610 may issue a second OTP issuance key that is different from the first OTP issuance key.

In addition, as will be described later, according to an embodiment, the OTP issuance key may be stored in the visitor management database 620 along with the connection identification information included in the connection information. In this case, the control server 610 may check whether an OTP issuance key corresponding to the connection identification information provided by the terminal 100 that performed the OTP issuance key request exists in the visitor management database 620. If an OTP issuance key corresponding to the connection identification information provided by the terminal 100 that performed the OTP issuance key request does not exist in the visitor management database 620, the control server 610 may issue a first OTP issuance key. However, if an OTP issuance key corresponding to the connection identification information provided by the terminal 100 that performed the OTP issuance key request exists in the visitor management database 620, the control server 610 may not issue the first OTP issuance key.

In addition, the control server 610 may generate an OTP issuance key and store it in the visitor management database 620. As an example, the control server 610 may store in the visitor management database 620 the identification information of the terminal 100 and/or information about the connection information (for example, connection identification information), access schedule information (accessible area (or identification information of the control device controlling the accessible area), accessible time (start time, end time), etc.), identification information of the user who has authority to access the corresponding area (for example, email address, SNS ID, mobile phone number, etc.) along with the generated OTP issuance key. In addition, information about the authentication information (for example, information about the type of authentication information such as QR code, RF signal, face, etc.) may be stored in the visitor management database 620 along with the OTP issuance key. In addition, according to an embodiment, the OTP issuance key storage confirmation flag that will be described below may also be stored with the OTP issuance key.

In addition, the control server 610 may transmit the OTP issuance key to the terminal 100. For example, the control server 610 may transmit the OTP issuance key to the terminal 100 using the REST API method. And, the terminal 100 may encrypt the OTP issuance key and store the encrypted OTP issuance key in the browser. Accordingly, the terminal 100 and the control server 610 can store the same OTP issuance key.

In addition, the terminal 100 may transmit an OTP issuance key storage confirmation request to the control server 610.

The OTP issuance key storage confirmation request may be a handshake process indicating that the terminal 100 has received the OTP issuance key from the control server 610. And, from the perspective of the control server 610, as the control server 610 generates the OTP issuance key only once according to the corresponding connection information, it may be necessary to confirm whether the OTP issuance key generated only once was transmitted to the terminal 100 without errors. Accordingly, the control server 610 may receive the OTP issuance key storage confirmation request from the terminal 100 to confirm that the OTP issuance key was transmitted to the terminal 100 without errors. And, in response to the OTP issuance key storage confirmation request from the terminal 100, the control server 610 may store an OTP issuance key storage confirmation flag in the visitor management database 620. In the visitor management database 620, the OTP issuance key storage confirmation flag may be stored in association with the corresponding OTP issuance key. And, the control server 610 may transmit an OTP issuance key storage confirmation response to the terminal 100.

As an example, if the terminal 100 requests an OTP issuance key from the control server 610 according to the connection information, the control server 610 may check whether the OTP issuance key was previously generated according to the corresponding connection information. For example, the control server 610 may check whether there is an OTP issuance key storage confirmation flag corresponding to the OTP issuance key, and if the OTP issuance key storage confirmation flag is not in the visitor management database 620, the control server 610 may generate the OTP issuance key. However, if the OTP issuance key storage confirmation flag corresponding to the OTP issuance key exists in the visitor management database 620, the control server 610 may confirm that the OTP issuance key was previously generated, and may transmit an error message regarding the OTP issuance key request to the terminal 100 without generating the OTP issuance key.

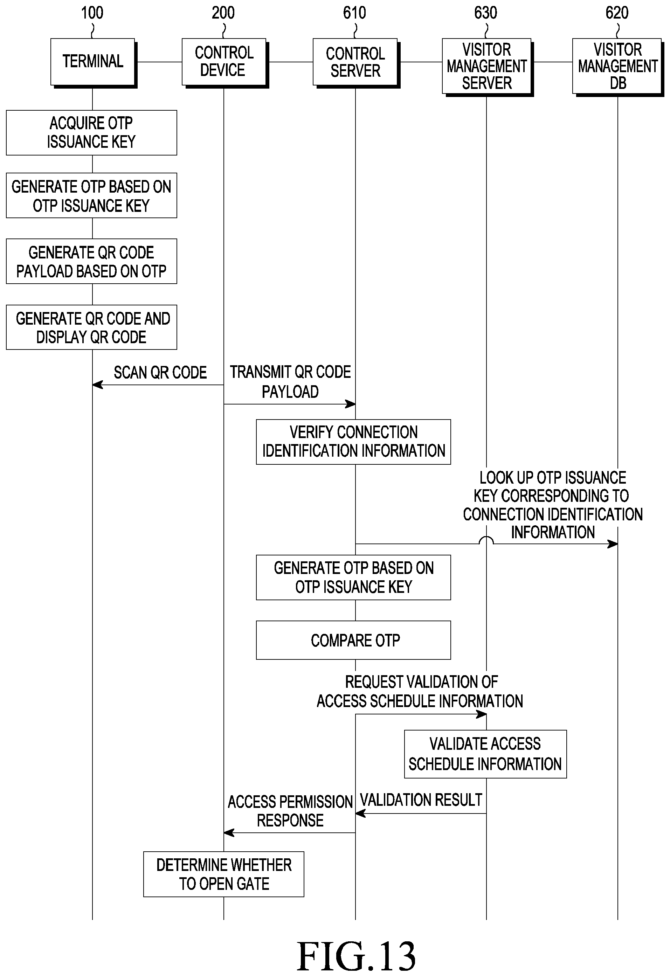

FIG. 13 is a diagram for explaining the generation of a QR code and an access authentication process using the QR code according to another embodiment.

Referring to FIG. 13, the terminal 100 may perform operation based on the connection information as a request for access authentication to a specific area. The terminal 100 may check whether the OTP issuance key is stored in the browser.

If the OTP issuance key is not stored in the browser, the terminal 100 may acquire the OTP issuance key according to what is described in FIG. 12. If the OTP issuance key is stored in the browser, the terminal 100 may acquire the OTP issuance key.

In addition, the terminal 100 may generate an OTP (One Time Password) using the OTP issuance key. And, the terminal 100 may generate a QR code payload using the generated OTP. Specifically, the terminal 100 may generate a QR code payload using the connection identification information included in the connection information and the generated OTP. As an example, the QR code payload may be expressed as follows, and in the QR code payload below, the connection identification information may appear as "a4a3906-4a9f-4332-9c52-580f546aa151", and the OTP may appear as "882351". In addition, the terminal 100 may generate a QR code using the QR code payload and display the QR code.

In one embodiment, the generation of the OTP, the generation of the QR code payload, and the generation of the QR code may be repeated at a relatively short predetermined time interval (for example, 5 seconds). That is, the QR code may change at a predetermined time interval. This is for security purposes. For example, user C's terminal may generate a QR code, transmit the generated QR code to user D's terminal, and user D's terminal may display the QR code and tag it to the control device 200. However, it may take time from the generation of the QR code in user C's terminal to the display of the QR code in user D's terminal. On the other hand, as the generation of the QR code in user C's terminal is repeated for a relatively short predetermined time, a different QR code, not the QR code transmitted to user D's terminal, may be generated in user C's terminal at the time the QR code is displayed in user D's terminal. Accordingly, even if the QR code displayed in user D's terminal is tagged to the control device 200, access to the area managed by the control device 200 by user D's terminal may be denied because the QR code displayed in user D's terminal is already an invalid QR code.

In addition, after the QR code is displayed on the terminal 100, the camera of the control device 200 may scan the QR code. The control device 200 may acquire the QR code payload from the scanned QR code. And, the control device 200 may transmit the QR code payload to the control server 610. The control server 610, as a server for controlling the control device 200, may be included in the server 300 described above. And, the control server 610, the visitor management server 630, and the visitor management database 620 may be included in the server 300 described above, and they may be configured as one physically or may be configured independently physically. In addition, as described above, the visitor management database 620 may be included in the control server 610.

In addition, the control server 610 may perform user authentication based on the QR code payload. User authentication will be described in detail below.

Specifically, first, the control server 610 may acquire the connection identification information from the QR code payload. And, the control server 610 may look up the OTP issuance key corresponding to the connection identification information in the visitor management database 620. The control server 610 may acquire the OTP issuance key from the visitor management database 620 and generate an OTP based on the OTP issuance key. And, the control server 610 may acquire the OTP from the QR code payload and compare the OTP from the QR code payload with the OTP generated based on the OTP issuance key. If the OTP from the QR code payload and the OTP generated based on the OTP issuance key do not match, the control server 610 may determine that the QR code is not valid. In the example described above, if the control server 610 acquires the QR code payload of the QR code displayed on user D's terminal, the OTP from the QR code payload and the OTP generated based on the OTP issuance key may not match. Specifically, while the OTP and QR code are renewed in user C's terminal for a short time, as time is taken in the process of user D's terminal acquiring the QR code from user C's terminal, at the point where the control device 200 scans the QR code from user D's terminal, the OTP included in the QR code payload of the QR code displayed on user D's terminal and the OTP renewed in user C's terminal may be different. That is, as the OTP generated in user C's terminal and the OTP generated in the control server 610 are synchronized, the OTP generated in the control server 610 only matches the OTP renewed in user C's terminal, but may not match the OTP included in the QR code payload of the QR code displayed on user D's terminal. However, without the QR code replication process of user D's terminal, as the QR code is directly displayed on user C's terminal, if the control device 200 scans the QR code within a short time after the QR code is generated in user C's terminal, the OTP generated in the control server 610 and the OTP renewed in user C's terminal may match. In this case, the control server 610 may determine that the QR code is valid.

If the control server 610 determines that the QR code is valid, the control server 610 may request the visitor management server 630 to verify the validity of the access schedule information. In response to the request for verification of the validity of the access schedule information from the control server 610, the visitor management server 630 may acquire access schedule information (accessible area (or identification information of the control device controlling the accessible area), accessible time (start time, end time), etc.) corresponding to the connection identification information from the visitor management database 620. In addition, the visitor management server 630 may verify the validity of the acquired access schedule information. For example, the visitor management server 630 may verify the validity of the access schedule information by determining whether the accessible area of the access schedule information corresponds to the control device 200 that scanned the QR code, whether the accessible time of the access schedule information corresponds to the current time, whether the information about the authentication information (for example, information about the type of authentication information such as QR code, RF signal, face, etc.) stored in the visitor management database 620 along with the OTP issuance key corresponds to the type of authentication information (for example, QR code) scanned by the control device 200, etc.

The visitor management server 630 may transmit the result of verifying the validity of the access schedule information to the control server 610. The control server 610 may acquire the result of verifying the validity of the access schedule information from the visitor management server 630, and may generate a result of user authentication, that is, a response regarding access permission, by synthesizing the validity of the QR code and the result of verifying the validity of the access schedule information. The control server 610 may transmit the response regarding access permission to the control device 200, and the control device 200 may determine whether to open the gate according to the acquired response. For example, if the QR code (or OTP) and/or access schedule information is not valid, the control server 610 may transmit a response to the control device 200 that access is denied, and according to the acquired response, the control device 200 may not open the gate. If the QR code (or OTP) and access schedule information are valid, the control server 610 may transmit a response to the control device 200 that access is granted, and according to the acquired response, the control device 200 may open the gate.

Various embodiments of this specification can be implemented as software including instructions stored on a machine-readable storage media. The machine, as a device capable of calling the stored instructions from the storage media and operating according to the called instructions, may include an electronic device according to the disclosed embodiments. When the instructions are executed by a processor, the processor can perform the function corresponding to the instructions directly or by using other components under the control of the processor. Instructions may include code generated or executed by a compiler or interpreter. The machine-readable storage media may be provided in the form of a non-transitory storage media. Here, 'non-transitory storage media' means that it does not include signals and is tangible, but does not distinguish whether data is stored permanently or temporarily on the storage media. For example, 'non-transitory storage media' may include a buffer where data is temporarily stored.

According to one embodiment, methods according to various embodiments disclosed in this specification may be provided as part of a computer program product. The computer program product may be traded as merchandise between sellers and buyers. The computer program product may be distributed in the form of a machine-readable storage media (e.g., Compact Disc Read Only Memory, CD-ROM), or online through an application store (e.g., Play Store^{™}). In the case of online distribution, at least part of the computer program product, for example, a downloadable app, may be at least temporarily stored or temporarily created in storage media such as memory of the manufacturer's server, application store's server, or relay server.

Although the embodiments have been described with limited embodiments and drawings, those skilled in the art will be able to make various modifications and variations from the above description. For example, the described techniques may be performed in a different order than the described method, and/or components of the system, structure, device, circuit, etc. described may be combined or joined in a different form than the described method, or replaced or substituted by other components or equivalents, and appropriate results may still be achieved.

Therefore, other implementations, other embodiments, and equivalents to the patent claims are also within the scope of the following patent claims.

## Claims

1. A method for access authentication of a terminal, comprising:
acquiring identification information of a control device from the control device;
performing login for a user of the terminal to an authentication server, and acquiring user identification information of the terminal from the authentication server according to the login;
generating authentication data based on the identification information of the control device and the user identification information; and
transmitting the authentication data to a server that performs user authentication for the user of the terminal,
wherein the server being different from the authentication server.

2. The method of claim 1,
wherein the acquiring identification information of a control device from the control device comprises:
scanning a QR code displayed on the control device;
acquiring a QR code payload from the QR code; and
acquiring the identification information of the control device from the QR code payload.

3. The method of claim 1,
wherein the user identification information includes at least one of a mobile phone number of the terminal, a name of the user, an email address of the user, and SNS identification information of the user of the terminal.

4. The method of claim 1,
wherein the acquiring user identification information of the terminal from the authentication server comprises:
acquiring an access token from the authentication server according to the login; and
acquiring the user identification information based on the access token.

5. The method of claim 4,
wherein the acquiring user identification information of the terminal from the authentication server comprises acquiring the user identification information of the terminal from the authentication server through a browser of the terminal, and
wherein the transmitting the authentication data comprises transmitting the authentication data to the server through the browser.

6. The method of claim 5, further comprising:
storing at least one of the access token or the user identification information in the browser or an access authentication application.

7. The method of claim 4,
wherein the acquiring user identification information of the terminal from the authentication server comprises acquiring the user identification information of the terminal from the authentication server through an access authentication application of the terminal, and
wherein the transmitting the authentication data comprises transmitting the authentication data to the server through the access authentication application.

8. The method of claim 7, further comprising:
receiving an installation inducement message for the access authentication application from the server; and
installing the access authentication application on the terminal according to the installation inducement message.

9. A non-transitory computer-readable recording medium having recorded thereon a program for performing the method of any one of claims 1 to 8.

10. A server, comprising:
a communication module; and
at least one processor,
wherein the at least one processor:
acquires authentication data from a terminal, wherein the authentication data is based on identification information of a control device controlling a certain security area and user identification information of the terminal, and the user identification information is acquired by the terminal from an authentication server that is different from the server,
performs user authentication on whether the user is allowed to access the certain security area,
transmits a result of the user authentication to the control device,
acquires a reverification result of the user authentication result from the control device, and
determines whether the user is allowed to access the certain security area based on the reverification result.

## Amended claims

### Amended claims in accordance with Rule 137(2) EPC.

1. A method for access authentication of a terminal, (100) comprising:
acquiring identification information of a control device (200) from the control device (200);
performing login for a user of the terminal (100) to an authentication server (400),
**characterized by**
acquiring an access token from the authentication server (400) according to the login;
acquiring the user identification information of the terminal (100) based on the access token;
storing at least one of the access token or the user identification information in a browser or an access authentication application in the terminal (100), wherein the stored access token or the user identification information is configured to be used in a subsequent access authentication to omit re-acquiting the access token from the authentication server;
after acquiring both the identification information of the control device (200) and the user identification information,
generating, by the terminal (100) independent of the authentification server (400) authentication data based on the identification information of the control device (200) and the user identification information; and
transmitting the authentication data to a server (300) that performs user authentication for the user of the terminal (100),
wherein the server (300) is different from the authentication server (400).

2. The method of claim 1,
wherein the acquiring identification information of a control device (200) from the control device (200) comprises:
scanning a QR code displayed on the control device (200);
acquiring a QR code payload from the QR code; and
acquiring the identification information of the control device (200) from the QR code payload.

3. The method of claim 1,
wherein the user identification information includes at least one of a mobile phone number of the terminal (100), a name of the user, an email address of the user, and SNS (Social Network Service) identification information of the user of the terminal (100).

4. The method of claim 1,
wherein the acquiring user identification information of the terminal (100) from the authentication server (400) comprises acquiring the user identification information of the terminal (100) from the authentication server (400) through a browser of the terminal (100), and
wherein the transmitting the authentication data comprises transmitting the authentication data to the server (300) through the browser.

5. The method of claim 1,
wherein the acquiring user identification information of the terminal (100) from the authentication server (400) comprises acquiring the user identification information of the terminal (100) from the authentication server (300) through an access authentication application of the terminal (100), and
wherein the transmitting the authentication data comprises transmitting the authentication data to the server (300) through the access authentication application.

6. The method of claim 5, further comprising:
receiving an installation inducement message for the access authentication application from the server (300); and
installing the access authentication application on the terminal (100) according to the installation inducement message.

7. Anon-transitory computer-readable recording medium having recorded thereon a program for performing the method of any one of claims 1 to 6.

8. A server, comprising:
a communication module; and
at least one processor,
wherein the at least one processor:
acquires authentication data from a terminal (100), wherein the authentication data is based on identification information of a control device (200) controlling a certain security area and user identification information of the terminal (100), and the user identification information is acquired by the terminal (100) from an authentication server (400) that is different from the server (300),
performs user authentication on whether the user is allowed to access the certain security area,
transmits a result of the user authentication to the control device (200),
**characterized in that** the at least one processor further
acquires a reverification result of the user authentication result from the control device (200), wherein the reverification result is generated by the control device (200) performing a reverification to determine that the user authentication result received from the server is valid for the control device (200), and
determines whether the user is allowed to access the certain security area based on the reverification result.
